# EUROPEAN PATENT APPLICATION

(11) **EP 4 610 704 A1**
(43) Date of publication of application: **03.09.2025**
(21) Application number: 25156552.9
(22) Date of filing: 07.02.2025
(51) Int. Cl.: G02B 6/46, G02B 6/44

(54) **SYSTEM AND METHOD FOR ROUTING OPTICAL FIBERS WITHIN A MULTIPLE DWELLING UNIT**

(30) Priority: 29.02.2024 US 202463559392 P
(71) Applicant: Corning Research & Development Corporation, Corning, New York 14831 (US)
(72) Inventor: May, Michael, Texas, 78613 (US); Stewart, Mitchell Harold, North Carolina, 28092 (US)
(74) Representative: Reddie & Grose LLP

(57) **Abstract**

The present disclosure relates to a system for routing optical fibers within multiple dwelling units (MDUs) where the system has a removable optical fiber feature that enables such routing of optical fibers within the MDUs.

## Description

### PRIORITY APPLICATION

This application claims the benefit of priority of U.S. Provisional Application No. 63/559,392, filed on February 29, 2024, the content of which is relied upon and incorporated herein by reference in its entirety.

### FIELD OF THE INVENTION

The present disclosure is directed to a system for routing optical fibers within a multi-dwelling unit.

### BACKGROUND OF THE INVENTION

Several hundred million multiple dwelling units (MDUs) exist globally, which are inhabited by about one third of the world's population. Due to the large concentration of tenants in one MDU, Fiber-to-the-X ("FTTX") deployments to these structures are more cost effective to service providers than deployments to single-family homes. Connecting existing MDUs to the FTTX network can often be difficult. Challenges can include gaining building access, limited distribution space in riser closets, and space for cable routing and management. Specifically, FTTX deployments within existing structures make it difficult to route cables within the walls or floors, or above the ceiling from a central closet or stairwell, to each living unit.

Conventionally, a service provider installs an enclosure (also known as a fiber distribution terminal (FDT)) on each floor, or every few floors, of an MDU. The FDT connects the building riser cable to the horizontal drop cables which run to each living unit on a floor. Drop cables are spliced or otherwise connected to the riser cable in the FDT only as service is requested from a tenant in a living unit. These service installations require multiple reentries to the enclosure, putting at risk the security and disruption of service to other tenants on the floor. This process also increases the service provider's capital and operating costs, as this type of connection requires the use of an expensive fusion splice machine and highly skilled labor. Routing and splicing individual drop cables can take an excessive amount of time, delaying the number of subscribers a technician can activate in one day, reducing revenues for the service provider. Alternatively, service providers install home run cabling the full extended length from each living unit in an MDU directly to a fiber distribution hub (FDH) in the building vault, therefore encompassing both the horizontal and riser with a single extended drop cable. This approach creates several challenges, including the necessity of first installing a pathway to manage, protect and hide each of the multiple drop cables. This pathway often includes very large (e.g., 2 inch to 4 inch to 6 inch) pre-fabricated crown molding made of wood, composite, or plastic. Many of these pathways, over time, become congested and disorganized, increasing the risk of service disruption due to fiber bends and excessive re-entry.

### BRIEF SUMMARY OF THE INVENTION

Various embodiments described herein relate to fiber optic pathways, such as those used in various fiber optic applications. In general, the present disclosure relates to a system for routing optical fibers within multiple dwelling units (MDUs) where the system has a removable optical fiber feature that enables such routing of optical fibers within the MDUs.

In one aspect, a method of installing a routing system and a jacketed optical fiber within a multiple dwelling unit (MDU), the routing system comprising a track having a channel configured to house the jacketed optical fiber is shown. The method comprising: adhering a portion of the track to a wall of the MDU; removing a portion of the jacketed optical fiber from the track of the routing structure; extending the jacketed optical fiber to create a slack loop; cutting the track to form a routing segment such that the routing segment is separated from the portion of the track that is adhered to the wall; and adhering the routing segment to the wall adjacent to the portion of the track that is adhered to the wall.

Optionally, adhering the routing segment to the wall comprises: forming a continuous channel between the portion of the track that is adhered to the wall and the routing segment.

Optionally, the method further comprises: mounting a point of entry box to the routing system; and routing the jacketed optical fiber within the point of entry box. Additionally, or as an alternative, the method further comprises: mounting a point of entry box to the routing system; and removing an outer jacket of the jacketed optical fiber to expose optical fibers within the jacketed optical fiber.

Optionally the method further comprises: cutting an optical fiber housed in the jacketed optical fiber to form an optical fiber section; terminating the optical fiber section with a fiber optic connector; and connecting the fiber optic connector to an adapter within the point of entry box.

Optionally, the track comprises an adhesive applied onto a surface of the track, the adhesive being covered by an adhesive strip.

Optionally, adhering the track to the wall comprises: removing the adhesive strip; and applying the adhesive and the track onto the wall.

Optionally, the jacketed optical fiber is pre-loaded into the channel of the track of the routing system.

Optionally, the routing system further comprises a plurality of features, wherein each of the plurality of features are spaced apart along a length of the track by a gap.

Optionally, a lifting tool is used to remove a portion of the jacketed optical fiber from the track by inserting a hook structure of the lifting tool into the gap between the features such that the hook structure engages with the portion of the jacketed optical fiber.

Optionally, once the hook structure is engaged with the portion of the jacketed optical fiber, the portion of the jacketed optical fiber is lifted and extracted from the channel of the routing system.

Optionally, adhering the track to the wall includes using an application tool to apply pressure onto the track such that the track adheres to the wall.

Optionally, the cutting the track step further comprises: making a first cut and a second cut on the track, wherein the first cut and the second cut are spaced apart to create a track segment; wherein the track segment has a length that corresponds to the length of the slack loop.

Optionally, the track segment is discarded prior to the adhering the routing segment step.

In one aspect, a method is provided of installing a routing system and a jacketed optical fiber along a corner of a wall within a multiple dwelling unit (MDU), the routing system comprising a track having a channel configured to house the jacketed optical fiber is provided. The method comprising: adhering a portion of the track to the wall of the MDU; removing a portion of the jacketed optical fiber from the track of the routing structure; cutting the track to form a routing segment such that the routing segment is separated from the portion of the track that is adhered to the wall; and adhering the routing segment to the wall along the corner of the wall of the MDU, wherein a corner of the routing segment is adjacent to a corner of the track.

Optionally, the track comprises an adhesive applied onto a surface of the track, the adhesive covered by an adhesive strip.

Optionally, adhering the track to the wall comprises: removing the adhesive strip; and applying the adhesive and the track onto the wall. In one embodiment, the jacketed optical fiber is pre-loaded into the channel of the track of the routing system.

Optionally, the routing system further comprises a plurality of features, wherein each of the plurality of features are spaced apart along a length of the track by a gap.

Optionally, a lifting tool is used to remove a portion of the jacketed optical fiber from the track by inserting a hook structure of the lifting tool into the gap between the features such that the hook structure engages with the portion of the jacketed optical fiber.

Optionally, once the hook structure is engaged with the portion of the jacketed optical fiber, the portion of the jacketed optical fiber is lifted and extracted from the channel of the routing system.

Optionally, the cutting the track step further comprises: making a first cut and a second cut on the track, wherein the first cut and the second cut are spaced apart to create a track segment; wherein the track segment is discarded prior to the adhering the routing segment step.

### BRIEF DESCRIPTION OF THE DRAWINGS

Having thus described the invention in general terms, reference will now be made to the accompanying drawings, which are not necessarily drawn to scale and are meant to be illustrative and not limiting, and wherein:
FIG. 1 is a schematic view of an exemplary multiple dwelling units (MDU) having a drop access location system in accordance with the present disclosure;
FIG. 2A is a schematic view of an exemplary final drop system in accordance with the present disclosure;
FIG. 2B is a front view of a point of entry box that is used within the drop access system of FIG. 2A;
FIG. 3A is a perspective view of an optical fiber routing system in accordance with the present disclosure;
FIG. 3B is a perspective view of the optical fiber routing system of FIG. 3A with an optical fiber cable housed within the optical fiber routing system;
FIGS. 4-11 illustrate a method of installing the routing system within an MDU in accordance with the present disclosure; and
FIGS. 12-14 illustrate a method of installing the routing system to account for a corner on a wall within an MDU.

### DETAILED DESCRIPTION OF THE INVENTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

In general, the present disclosure relates to a system for routing optical fibers within multiple dwelling units (MDUs) where the system has a removable optical fiber feature that enables such routing of optical fibers within the MDUs.

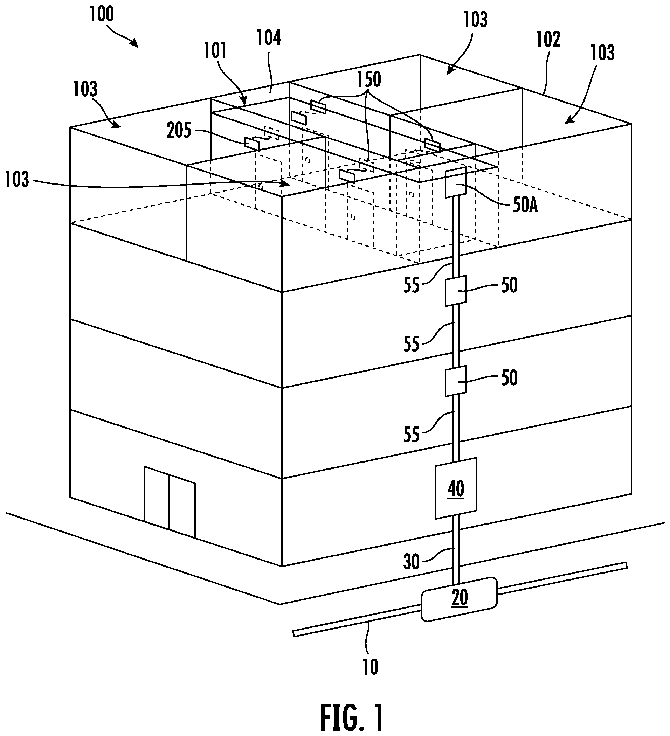

Referring first to FIG. 1, an example MDU 100 that can accommodate the exemplary drop access system described herein is shown. MDU 100 is a multi-floor structure having a plurality of living units 103 located therein. One example floor 102 has four living units 103 having a common hallway 104. Feeder cable 10 brings communications lines (hereinafter referred to as "optical fiber cables") to and from building 100. These feeder lines are spliced to the MDU's cabling at a splice closure 20. The building feeder lines 30 are distributed to the building from a fiber distribution hub (FDH) 40. Each floor includes a fiber distribution terminal (FDT) 50 that receives optical fiber cables via riser cable 55. In the present example, a drop access system 101 coupling the optical fiber cables from FDT 50a can be installed on hallway 104 where drop access boxes 150 can be disposed at each living unit and can receive one or more optical fiber cables from duct 110.

As is also mentioned above, the drop access system 101 can be configured to accommodate electrical wire drops and hybrid combination drops as well. In alternative aspects, the drop access system 101 can be configured to supply at least one of uninterrupted DC power and AC power to an optical network terminal located in an individual living unit at the drop location.

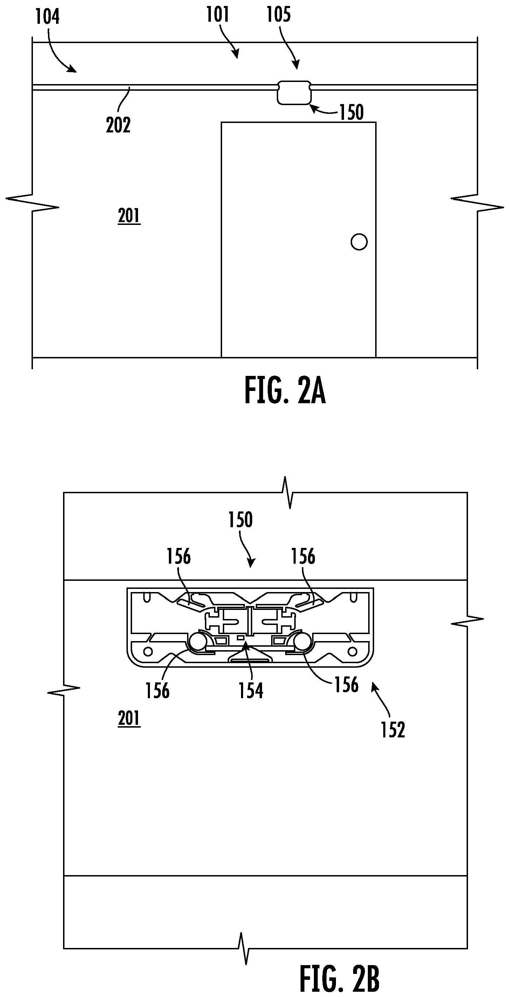

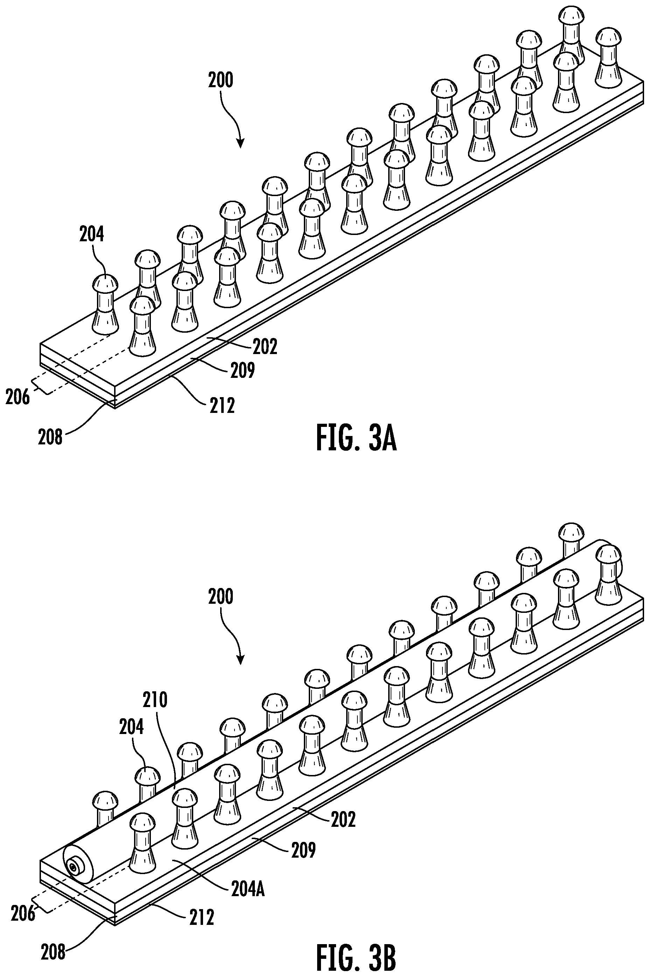

Referring now to FIG. 2A, a schematic view of a drop access system 101 is shown. System 101 is installed in a hallway of an exemplary MDU 100. System 101 can be utilized in other indoor and outdoor applications, and in commercial or residential buildings, such as in office buildings, professional suites, and apartment buildings. The drop access system 101 comprises a conduit or duct or track 202 which contains one or more jacketed optical fibers 210 (FIG. 3B) from a telecommunications closet (or other distribution location) to one or more living units 103. The jacketed optical fibers 210 can comprise optical fibers for data, video, and/or telephone signal transmission. In one aspect, the jacketed optical fibers 210 can comprise discrete (loose) or ribbonized optical fiber, such as 900 µm buffered optical fiber(s) or other standard size communications optical fiber. In addition, in another aspect, the jacketed optical fibers 210 can comprise optical fibers 210 that can be single mode or multimode optical fibers. While the jacketed optical fiber 210 shows a single optical fiber 210A in FIG. 3B, it is within the scope of the present disclosure that jacketed optical fiber 210 can comprise multiple optical fibers 210A. In addition, although the exemplary aspects described herein are often specific to accessing optical fiber lines, it would be understood by one of ordinary skill in the art given the present description that the system can be configured to accommodate electrical wire drops and hybrid combination drops (optical fibers and electrical wires) as well.

System 101 can comprise one or more point of entry boxes 150 that are located at one or more access points 105, such as at or near the entryway of a living unit. As is described in U.S. Patent No. 8,107,785, incorporated by reference herein in its entirety, an exemplary point of entry box 150 can include a base portion and a cover, where the access box (cover and base) can have a low profile and/or decorative outer design. Alternatively, the point of entry box can be designed as a low profile base unit for a drop fiber point of entry system, such as is described in the pending U.S. Patent No. 8,295,670, incorporated by reference herein in its entirety. In addition, the system 101 can be installed in the hallway or passageway of an MDU as is described in U.S. Patent No. 8,107,785, incorporated by reference above.

In addition and as shown in FIGS. 2A and 2B, the point of entry box 150 can include a mounting section 152 that provides for straightforward mounting of the point of entry box 150 onto the track 202. Mounting section 152 is configured to fit onto and over duct 110. In this manner, point of entry box 150 can be mounted to track 202 after the track 202 (and jacketed optical fibers 210 therein) are already installed. In addition, the configuration of mounting section 152 allows for point of entry box 150 to be mounted onto track 202 at nearly any location along the track path. This configuration allows a through hole to be drilled into the living unit 103 at a later time. In addition, the configuration of system 101 allows for multiple possible access box locations, including above door locations or at lower height locations in the hallway 104 of the MDU 100. Furthermore, point of entry box 150 includes an adapter 154 that is configured to couple at least one jacketed optical fiber 210 or optical fiber 210A to a subscriber line within the living unit 103 as discussed in greater detail herein. The wall mounting portion 152 further includes routing structures 156 to provide a slack storage section for storing excess amounts of the jacketed optical fiber 210 or optical fibers 210A housed within jacketed optical fiber 210 that are fed through track 202. For example, a series of tabs or other structures disposed in a recess of the wall mounting portion 152 can be configured to loosely secure excess optical fibers 210A. The optical fibers 210A can be protected from over-bending by configuring the wall mounting portion 152 to have a suitable radius or width.

Referring now to FIGS. 3A and 3B, an optical fiber routing system (hereinafter referred to as "routing system") 200 is shown. Routing system 200 comprises a track 202 and features 204 that are positioned along its length. As shown, in some embodiments, the features 204 are positioned on opposing sides of the channel 206. In some embodiments, the features 204 may be intermittently spaced along the length of the track. In one embodiment, the features 204 can be post-like features that may include a widened cap at the top of the features (much like mushrooms), such as those illustrated in FIGS. 3A and 3B, where the cap aids in securing and protecting the jacketed optical fiber 210 in the channel 206. The jacketed optical fiber 210 may be inserted into the channel 206 using an insertion tool that applies pressure onto the jacketed optical fiber 210 in the direction of the channel 206 in order to slide the jacketed optical fiber 210 past the any cap or top of the features and secure the jacketed optical fiber 210 in the channel 206.

The surface of the track that is intended for adhesion to the wall, i.e., surface 208, may be pre-laminated with some sort of adhesive layer 209, e.g., a pressure sensitive adhesive layer. The adhesive may be a double sided adhesive for sticking to both the track and to the interior wall of a dwelling. The side of the adhesive intended for adhesion to the interior wall may initially be covered with a liner 212 (shown, but optional), that may be stripped away by the installer at the time of application of the track to the wall. In one embodiment, the adhesive layer 209 may be a stretch-release adhesive. Any appropriate type of adhesive for use in adhesive layer 209 is contemplated.

In some embodiments, the track 202 and the features 204 will be made up of a flexible material that is either clear or translucent. The flexibility of the track 202 and features 204 enable the track 202 to bend en route to the wall outlet, where, e.g, the track must turn a corner. Additionally, flexibility of the features 204 allows for the optical fiber cable 210 to be snapped into the channel 206. The clear or translucent nature of the track 202 allows it to be aesthetically pleasing and difficult to notice for tenants or workers in MDU 100. Alternatively, the track 202 and features 204 may be made up of a flexible material that is color-matched to the color of the wall onto which it is being adhered. Similarly, in order to make jacketed optical fiber 210 less conspicuous, the buffer coating around the optical fiber 210A routed in the track 202 may be either clear or translucent or may be color-matched to the color of the wall onto which the track 202 is adhered. Color-matching the track or buffered optical fiber 210A may offer similar concealing, aesthetically pleasing properties to the system.

In some embodiments, a cover portion may be applied over the channel 206 as described in U.S. Patent No. 10,018,798, which is incorporated by reference herein in its entirety.

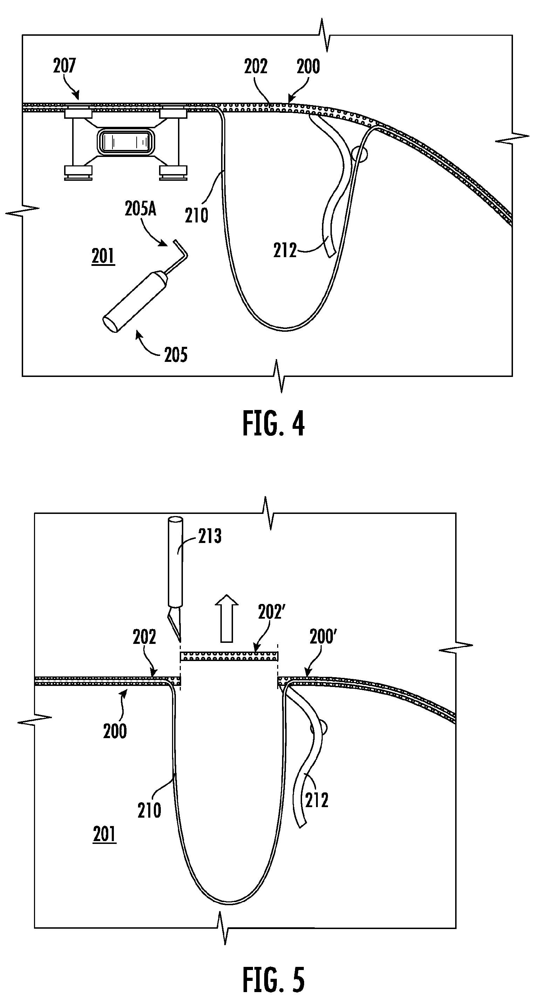

Referring now to FIGS. 4-11, a method of installing routing system 200 within drop access system 101 is shown. Referring first to FIG. 4, routing system 200 is installed onto a wall 201 within MDU 100. As mentioned previously, the wall 201 may be in a hallway of MDU 100. However, it is within the scope of the present disclosure that the wall 201 may be within a living unit 103 of MDU 100. When installing track 202 on the wall 201, liner 212 is removed such that adhesive layer 209 is exposed and applied onto the wall to adhere track 202 to the wall 201. In some embodiments, a jacketed optical fiber 210 or optical fiber 210A is pre-loaded into channel 206 of track 202, and an application tool 207 is used along the length of track 202 to apply pressure onto the routing system 200 and further secure track 202 to wall 201 and jacketed optical fiber 210 or optical fiber 210A within channel 206 of track 202. In particular, jacketed optical fiber 210 or optical fiber 210A is installed into channel 206 of track 202 when routing system 200 is manufactured in the factory, and the routing system 200 with the pre-installed jacketed optical fiber 210 or optical fiber 210A is provided on a spool or reel from which the routing system 200 is drawn and applied onto wall 201 as described above. In other embodiments, a jacketed optical fiber cable 210 or optical fiber 210A is loaded into channel 206 of track 202, and as shown, an application tool 207 is used along the length of track 202 to apply pressure onto the track 202 and onto optical fiber 210A such that the track 202 adheres to the wall 201 and the optical fiber 210A is secured within channel 206 of track 202. While an application tool 207 is described in the present disclosure, it is within the scope of the present disclosure that alternate methods of applying the track and/or optical fiber 210A onto wall 201 may be used (e.g., a technician's hands, etc.).

Then, with continued reference to FIG. 4, a portion of the jacketed optical fiber 210 that is seated within track 202 is removed. To remove the portion of jacketed optical fiber 210, a lifting tool 205 can be used to lift the portion of the jacketed optical fiber 210 from the channel 206. In particular, lifting tool 205 includes a hook structure 205A that can be inserted between features 204 within gap 204A such that hook structure 205A can engage with jacketed optical fiber 210. Once hook structure 205A engages with the jacketed optical fiber 210, lifting tool 205 is lifted such that hook structure 205A lifts the portion of the jacketed optical fiber 210 from the channel 206 of track 202 and beyond features 204. Once the portion of the jacketed optical fiber 210 is removed, the jacketed optical fiber 210 is pulled or actuated such that a desired length of the jacketed optical fiber 210 is extracted from track 202 for creating a slack loop as discussed below. For example, if a desired length of thirty six (36) inches of jacketed optical fiber 210 is needed, then thirty-six (36) inches of jacketed optical fiber 210 is extracted from track 202 downstream of the initial extraction point to create a slack loop having that length of jacketed optical fiber 210.

After the desired length of the jacketed optical fiber 210 is removed, track 202 of routing system 200 is cut where the jacketed optical fiber 210 was removed as shown in FIG. 5 to form a routing segment 200'. In particular, track 202 is cut in two places that correspond to the length of the jacketed optical fiber 210 that is removed from track 202 as shown. The two cuts as shown create a track segment 202' that is removed as shown in FIG. 5 and discussed below.

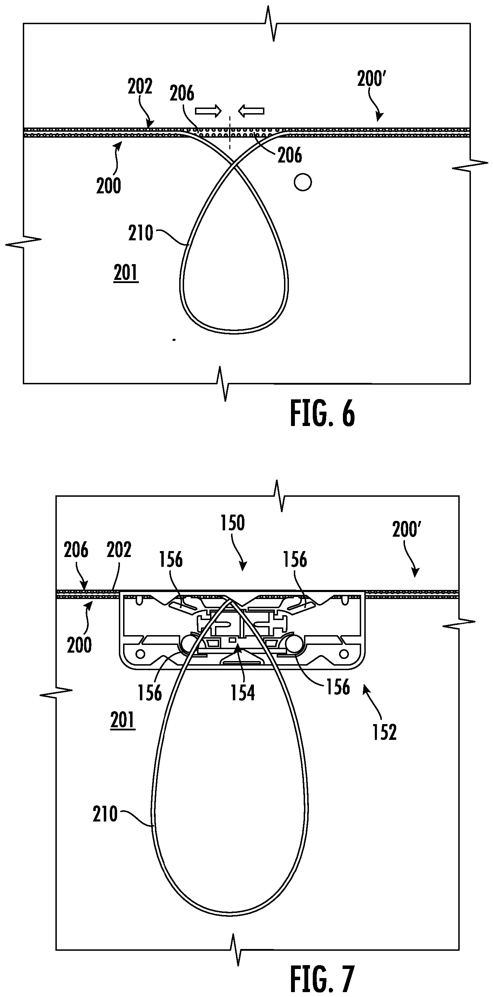

Once the slack loop is created as shown in FIG. 6, track segment 202' is removed or discarded and routing segment 200' is installed onto the wall 201 such that routing segment 200' and routing system 200 abut one another and are aligned to re-establish the continuity of channel 206. That is, channel 206 of routing segment 200' and channel 206 of routing system 200 are aligned to form a continuous channel 206 for the jacketed optical fiber 210. Routing segment 200' is installed onto the wall 201 similar to how routing system 200 is installed - by removing liner 212 and applying adhesive layer 209 onto the wall 201.

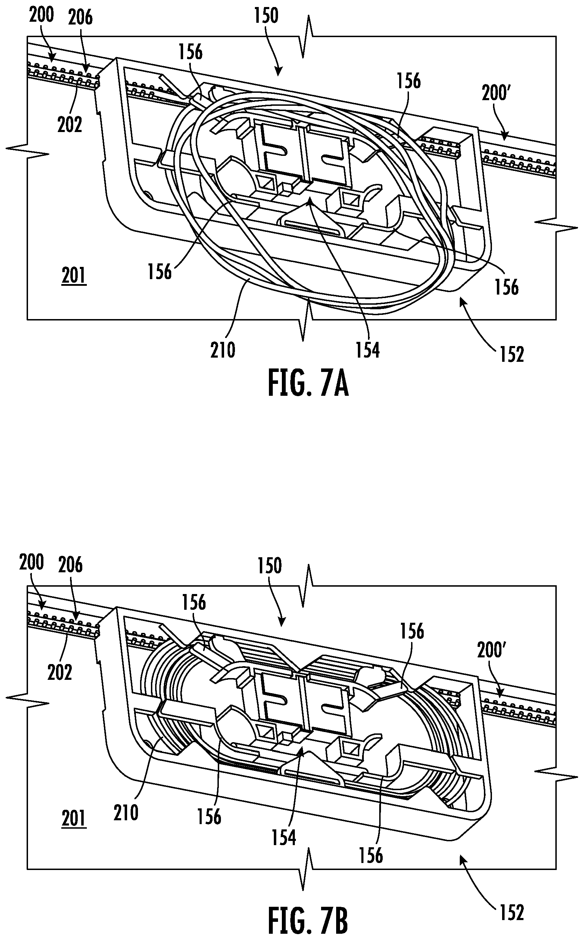

Then, as shown in FIG. 7, the wall mounting portion 152 of drop access box 150 is mounted on the wall 201 such that the slack loop is integrated into the drop access box 150 as described herein.

In one embodiment, as shown in FIGS. 7A and 7B, the slack loop of the jacketed optical fiber 210 is routed around routing structures 156 to be encased in the wall mounting portion 152 of drop access box 150.

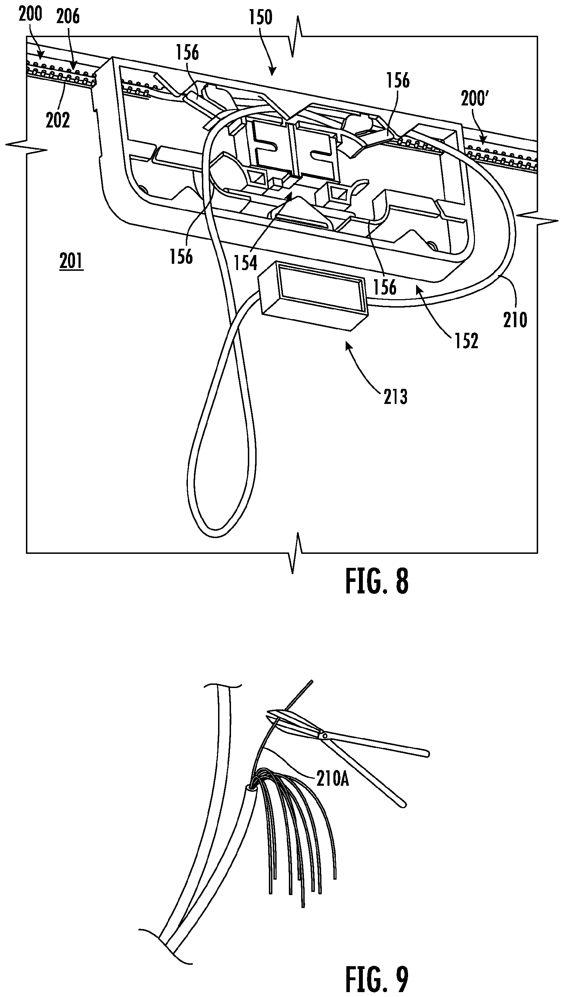

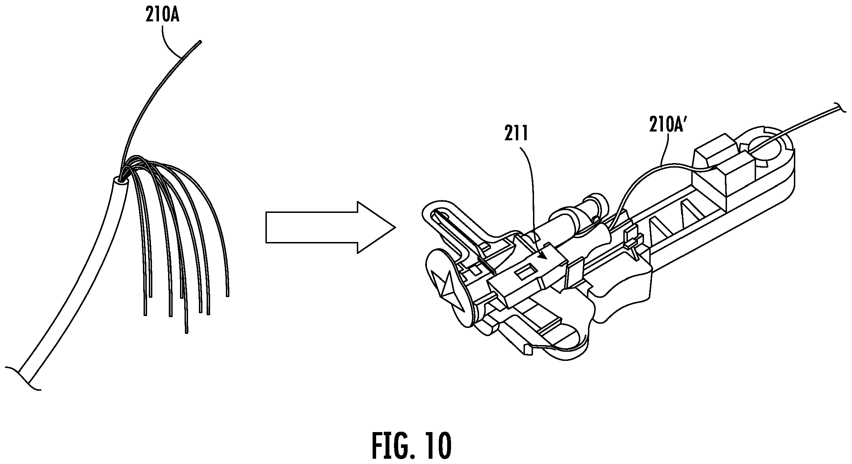

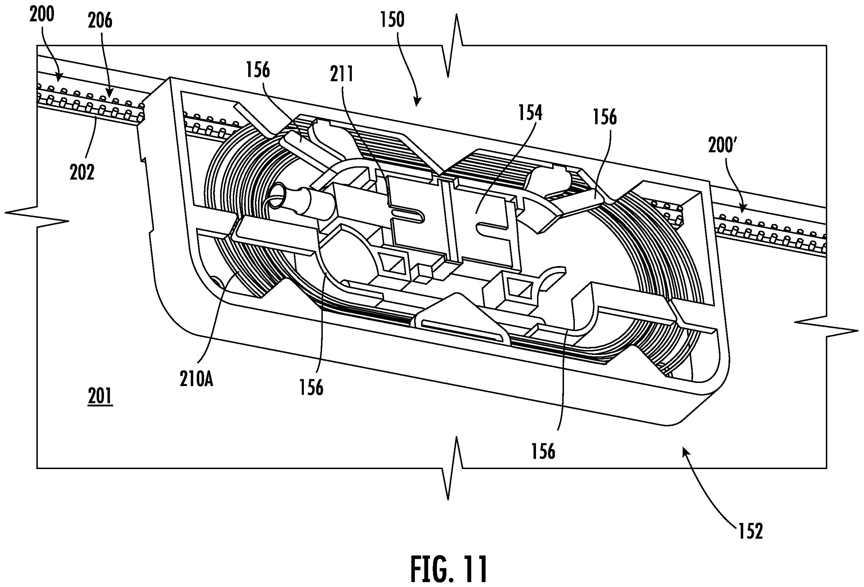

In another embodiment, as shown in FIGS. 8-11, one of the optical fibers 210A is terminated such that the optical fiber 210A is coupled to the adapter 154 and connects a subscriber line (i.e., living unit 103) to the corresponding FDT 50 (FIG. 1) as discussed below. In particular, first, as shown in FIG. 8, a cutting tool 213 is used to cut and remove the covering of optical fiber cable 210 and expose the optical fibers 210A within the optical fiber cable 210. Then, as shown in FIG. 9, a single optical fiber 210A within the group of optical fibers 210A is cleaved with a cutting tool (e.g., scissors) to create an optical fiber section 210A' as shown in FIG. 10. As shown, the optical fiber section 210A' is terminated with a fiber optic connector 211 by methods that are known in the art. Finally, the fiber optic connector 211 of the terminated optical fiber section is then coupled to adapter 154 of drop access box 150 as shown in FIG. 11.

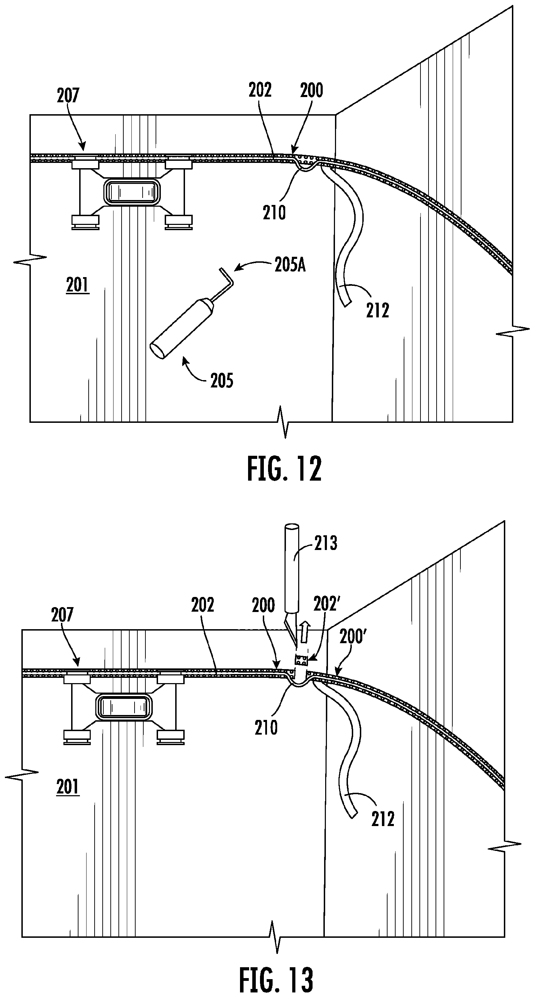

Referring now to FIGS. 12-14, a method of installing the routing system 200 along a corner of a wall 201 is shown. Referring first to FIG. 12, routing system 200 is installed onto a wall 201 within MDU 100. As mentioned previously, the wall 201 may be in a hallway of MDU 100. However, it is within the scope of the present disclosure that the wall 201 may be within a living unit 103 of MDU 100. When installing track 202 on the wall 201, liner 212 is removed such that adhesive layer 209 is exposed and applied onto the wall to adhere track 202 to the wall 201. In some embodiments, a jacketed optical fiber 210 or optical fiber 210A is pre-loaded into channel 206 of track 202, and an application tool 207 is used along the length of track 202 to apply pressure onto the routing system 200 and further secure track 202 to wall 201 and optical fiber 210A within channel 206 of track 202. In other embodiments, a jacketed optical fiber cable 210 or optical fiber 210A is loaded into channel 206 of track 202, and as shown, an application tool 207 is used along the length of track 202 to apply pressure onto the track 202 and onto optical fiber 210A such that the track 202 adheres to the wall 201 and the optical fiber 210A is secured within channel 206 of track 202. While an application tool 207 is described in the present disclosure, it is within the scope of the present disclosure that alternate methods of applying the track and/or optical fiber 210A onto wall 201 may be used (e.g., a technician's hands, etc.).

Then, with continued reference to FIG. 12, a portion of the jacketed optical fiber 210 that is seated within track 202 is removed. To remove the portion of jacketed optical fiber 210, lifting tool 205 can be used to lift the portion of the jacketed optical fiber 210 from the channel 206. In particular, lifting tool 205 includes a hook structure 205A that can be inserted between features 204 within gap 204A such that hook structure 205A can engage with jacketed optical fiber 210. Once hook structure 205A engages with the jacketed optical fiber 210, lifting tool 205 is lifted such that hook structure 205A lifts the portion of the jacketed optical fiber 210 from the channel 206 of track 202 and beyond features 204. Once the portion of the jacketed optical fiber 210 is removed, the jacketed optical fiber 210 is pulled or actuated such that a desired length of the jacketed optical fiber 210 is extracted from track 202 as discussed below. In one embodiment, as shown, jacketed optical fiber 210 is actuated such that channel 206 is empty for the corresponding length spanning two (2) features 204 (FIGS. 3A and 3B). While the present disclosure discloses jacketed optical fibers 210 being removed for the corresponding length of two features 204, it is within the scope of the present disclosure that alternate lengths of jacketed optical fibers 210 may be removed from track 202 by this process.

After the desired length of the jacketed optical fiber 210 is removed, track 202 of routing system 200 is cut where the jacketed optical fiber 210 was removed as shown in FIG. 13 to form a routing segment 200'. In particular, track 202 is cut in two places that correspond to the length of the jacketed optical fiber 210 that is removed from track 202 as shown. The two cuts as shown create a track segment 202' that is removed as shown in FIG. 13 and discussed below. By cutting and removing track segment 202', the length of the jacketed optical fiber 210 has an increased length relative to the track 202, which enables bending of the jacketed optical fiber 210 as discussed in detail below.

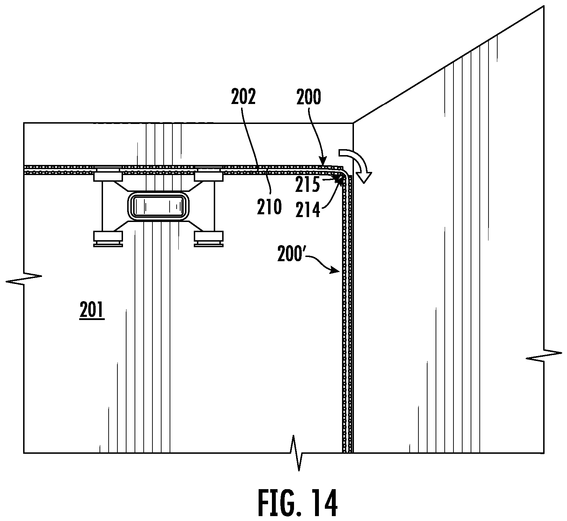

Once track segment 202' is removed or discarded, routing segment 200' is installed onto the wall 201 as shown in FIG. 14. In particular, routing segment 200' is installed onto the wall 201 such that a corner 214 of the routing segment 200' is in contact with a corner 215 of the track 202. Routing segment 200' is installed onto the wall 201 at an angle relative to routing system 200. Routing segment 200' is installed similar to how routing system 200 is installed - by removing liner 212 and applying adhesive layer 209 onto the wall 201. This configuration enables jacketed optical fiber 210 to bend along the corner of the wall 201 without impacting the optical fibers 210A that are housed within jacketed optical fiber 210.

While bending a jacketed optical fiber 210 along a corner of wall 201 is disclosed, it is within the scope of the present disclosure that the method disclosed in FIGS. 12-14 enables jacketed optical fiber to be directed around various objects that could be in the pathway of routing system 200. For example, a sign may be mounted onto wall 201, and the method of FIGS. 12-14 enables routing system 200 and jacketed optical fiber 210 to be directed around the sign without the optical fibers 210A within jacketed optical fiber 210 incurring bend loss. Moreover, as shown, the method disclosed in FIGS. 12-14 enables a ninety (90) degree transition within a single plane of a room as discussed above.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. It is intended that the present invention cover the modifications and variations of this invention provided they come within the scope of the appended claims and their equivalents. Although specific terms are employed herein, they are used in a generic and descriptive sense only and not for purposes of limitation.

## Claims

1. A method of installing a routing system and a jacketed optical fiber within a multiple dwelling unit (MDU), the routing system comprising a track having a channel configured to house the jacketed optical fiber, the method comprising:
adhering a portion of the track to a wall of the MDU;
removing a portion of the jacketed optical fiber from the track of the routing structure;
cutting the track to form a routing segment such that the routing segment is separated from the portion of the track that is adhered to the wall; and
adhering the routing segment to the wall adjacent to the portion of the track that is adhered to the wall.

2. The method of claim 1, further comprising:
extending the jacketed optical fiber to create a slack loop.

3. The method of claim 1 or claim 2, wherein adhering the routing segment to the wall comprises:
forming a continuous channel between the portion of the track that is adhered to the wall and the routing segment.

4. The method of any of claims 1-3, further comprising:
mounting a point of entry box to the routing system; and
routing the jacketed optical fiber within the point of entry box.

5. The method of any of claims 1-3, further comprising:
mounting a point of entry box to the routing system; and
removing an outer jacket of the jacketed optical fiber to expose optical fibers within the jacketed optical fiber.

6. The method of any of claims 1-3 or 5, further comprising:
cutting an optical fiber housed in the jacketed optical fiber to form an optical fiber section;
terminating the optical fiber section with a fiber optic connector; and
connecting the fiber optic connector to an adapter within the point of entry box.

7. The method of any of claims 1-6, wherein the track comprises an adhesive applied onto a surface of the track, the adhesive being covered by an adhesive strip.

8. The method of claim 7, wherein adhering the track to the wall comprises:
removing the adhesive strip; and
applying the adhesive and the track onto the wall.

9. The method of any of claims 1-8, wherein the jacketed optical fiber is pre-loaded into the channel of the track of the routing system.

10. The method of any of claims 1-9, wherein the routing system further comprises a plurality of features, wherein each of the plurality of features are spaced apart along a length of the track by a gap.

11. The method of claim 10, wherein a lifting tool is used to remove a portion of the jacketed optical fiber from the track by inserting a hook structure of the lifting tool into the gap between the features such that the hook structure engages with the portion of the jacketed optical fiber.

12. The method of claim 11, wherein once the hook structure is engaged with the portion of the jacketed optical fiber, the portion of the jacketed optical fiber is lifted and extracted from the channel of the routing system.

13. The method of any of claims 1-12, wherein adhering the track to the wall includes using an application tool to apply pressure onto the track such that the track adheres to the wall.

14. The method of any of claims 1-13, wherein the cutting the track step further comprises:
making a first cut and a second cut on the track, wherein the first cut and the second cut are spaced apart to create a track segment;
wherein the track segment has a length that corresponds to the length of the slack loop.

15. The method of claim 14, wherein the track segment is discarded prior to the adhering the routing segment step.
